# EUROPEAN PATENT APPLICATION

(11) **EP 4 397 874 A1**
(43) Date of publication of application: **10.07.2024**
(21) Application number: 22864350.8
(22) Date of filing: 23.08.2022
(51) Int. Cl.: F16C 32/04, F04D 19/04

(54) **MAGNETIC BEARING DEVICE AND VACUUM PUMP**

(30) Priority: 30.08.2021 JP 2021140133
(71) Applicant: Edwards Japan Limited, Yachiyo-shi, Chiba 276-8523 (JP)
(72) Inventor: ONO Takaaki, Yachiyo-shi Chiba 276-8523 (JP)
(74) Representative: Openshaw & Co.
(86) International application number: PCT/JP2022/031776
(87) International publication number: WO 2023/032766

(57) **Abstract**

To provide a magnetic bearing device and a vacuum pump capable of measuring with high sensitivity a natural vibration mode of a rotating body in a floating system using a magnetic bearing. In step 1, the operation in a second operation mode is started. In step 3, the gain of the controller is increased more than the gain obtained in a first operation mode. In step 5, the natural frequency is measured in this state. The natural vibration to be measured is a bending mode of the rotating body, a natural vibration mode of the rotor blades, a vibration mode associated with the stator, and a rigid body mode of the rotating body. The natural vibration may be computed by a central processing unit (CPU) of a control device or may be computed externally. After the natural frequency is measured in step 5, in step 7 the gain of the controller is returned to the gain obtained in the first operation mode. In step 9, the operation in the second operation mode is ended. In this manner, the natural vibration mode can be detected with high sensitivity.

## Description

### TECHNICAL FIELD

The present invention relates to a magnetic bearing device and a vacuum pump, and particularly relates to a magnetic bearing device and a vacuum pump capable of measuring with high sensitivity a natural vibration mode of a rotating body in a floating system using a magnetic bearing.

### BACKGROUND ART

With the recent further development of electronics, the demand for semiconductors such as memories and integrated circuits has been increasing rapidly.

These semiconductors are manufactured by doping an extremely pure semiconductor substrate with impurities to give electrical properties to the semiconductor substrate or by etching a fine circuit onto the semiconductor substrate to form a fine circuit.

These operations need to be performed in a high vacuum chamber in order to avoid the impact of dust and the like in the air. Typically, a vacuum pump is used for implementing exhaustion for such a chamber, and particularly a turbomolecular pump, i.e., a type of vacuum pump, is frequently used from the perspective of low residual gas, easy maintenance, and the like.

A semiconductor manufacturing process includes a large of number of processes in which various process gases are caused to act on the semiconductor substrate, and the turbomolecular pump is used not only to evacuate the chamber but also to exhaust these process gases from the chamber.

Furthermore, turbomolecular pumps are also used in equipment such as electron microscopes to create a high degree of vacuum in the environment inside the chamber of an electron microscope and the like in order to prevent refraction of the electron beam caused by the presence of dust and the like.

The turbomolecular pump is equipped with a magnetic bearing device to control the magnetic levitation of the rotating body. In the magnetic bearing device, the position of the rotating body needs to be controlled at high speed and with a strong force when the rotating body passes through a resonance point during accelerated operation or when a disturbance occurs during constant speed operation.

The position control of the rotating body is performed by feedback control. In the feedback control, when vibration occurs in the rotating body, the vibration is suppressed by the magnetic force synchronized with the vibration. As such, an oscillation phenomenon may occur when the design of the feedback control is inappropriate. In order to prevent this oscillation phenomenon, it is necessary to understand the natural vibration mode in advance and set an appropriate filter, such as by cutting a signal in the frequency band corresponding to the natural frequency of the rotating body (see PTL 1). In a case where the filter is not set appropriately, there is a concern of increased vibration and possible failure of the rotating body, leading to the need to readjust the filter.

### CITATION LIST

### PATENT LITERATURE

[PTL 1] Japanese Laid-Open Patent Publication No. H08-121477

### SUMMARY OF INVENTION

### TECHNICAL PROBLEM

Incidentally, there are a large number of natural vibration modes. Examples of modes existing in a large number include a rotor shaft bending mode and a natural vibration mode of rotor blades of a turbomolecular pump. For this reason, it is difficult to understand all the natural vibration modes in advance. Therefore, depending on the natural vibration modes that are not understood in advance, the rotating body may oscillate when the state of the system changes, as in temperature changes, shape changes, and time-dependent changes of the rotating body. As such, the natural vibration modes need to be innovatively measured with as high sensitivity as possible.

In measuring a natural vibration mode, the S/N ratio of a signal needs to be increased. In particular, in a case where a signal of a vibration component by a natural vibration mode is smaller than the sensor resolution, the natural vibration mode cannot be detected.

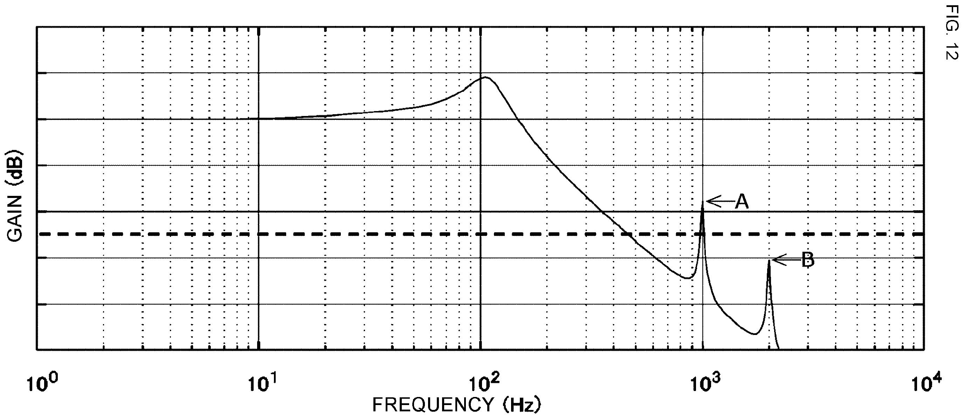

This phenomenon will be described below with reference to a drawing. FIG. 12 shows closed-loop transfer function gain characteristics based on a model block of a control system of a magnetic bearing. As can be seen in FIG. 12, when, for example, the sensor resolution is as shown by the dotted line, while a peak point A of the gain indicating natural vibration can be observed because the peak point A exceeds the sensor resolution, a peak point B has a smaller peak than the sensor resolution and therefore cannot be observed.

Therefore, the natural vibration mode at the peak point B, which has little impact in a certain situation, can also cause oscillation when the state of the system changes as described above.

The present invention has been made in view of the problems of the prior art, and an object of the present invention is to provide a magnetic bearing device and a vacuum pump capable of measuring with high sensitivity a natural vibration mode of a rotating body in a floating system using a magnetic bearing.

### SOLUTION TO PROBLEM

Thus, the present invention (claim 1) is a magnetic bearing device, including: a rotating body; a magnetic bearing that magnetically supports the rotating body in a levitated manner in air; and a magnetic bearing controller that controls the magnetic bearing, wherein magnetic bearing control by the magnetic bearing controller includes a first operation mode for performing normal operation of the rotating body with a first magnetic bearing control gain, and a second operation mode for measuring a natural frequency of the magnetic bearing device while performing temporary operation of the rotating body with a second magnetic bearing control gain, the second magnetic bearing control gain being greater than the first magnetic bearing control gain.

The magnetic bearing control gain in the second operation mode is greater than that in the first operation mode. Therefore, a signal corresponding to the natural vibration mode included in an output of the magnetic bearing device becomes large, the S/N ratio of the signal improves, and the natural vibration mode can be detected with high sensitivity.

Also, the present invention (claim 2) is an invention of a magnetic bearing device, wherein the natural frequency in the second operation mode is measured during rotation of the rotating body.

The magnetic bearing control gain may be increased in the second operation mode during rotation of the rotating body. In this case, the natural vibration mode during rotation of the rotating body can be measured with high sensitivity, with the impact of the gyro effect and the like taken into consideration.

In addition, the present invention (claim 3) is an invention of a magnetic bearing device, wherein the natural frequency in the second operation mode is measured while rotation of the rotating body is suspended.

The natural frequency can be measured in the second operation mode while the rotating body is stopped. In a case where the magnetic bearing control gain is increased while the rotating body is stopped as described above, if the control becomes unstable due to the increase in the magnetic bearing control gain and touchdown occurs, the impact applied to the rotating body or a touchdown bearing becomes smaller than that applied during rotation of the rotating body, hence better safety.

Furthermore, the present invention (claim 4) is an invention of a magnetic bearing device, wherein at least one control parameter for controlling the magnetic bearing in the first operation mode is adjusted on the basis of the natural frequency measured in the second operation mode.

This enables more optimal filter design and more stable magnetic bearing control.

Moreover, the present invention (claim 5) is an invention of a magnetic bearing device, wherein the control parameter is adjusted during the rotation of the rotating body.

The system can be operated efficiently by adjusting a parameter during rotation of the rotating body. The time taken until the rotating body stops for parameter adjustment is not wasted, shortening the time taken until rated operation of the rotating body.

Moreover, the present invention (claim 6) is an invention of a magnetic bearing device, wherein the second operation mode includes a first step of increasing a gain of the magnetic bearing control from the first magnetic bearing control gain to the second magnetic bearing control gain, a second step of measuring the natural frequency with the second magnetic bearing control gain, and a third step of returning the gain of the magnetic bearing control from the second magnetic bearing control gain to the first magnetic bearing control gain when the measurement in the second step is completed.

It is possible to efficiently increase the magnetic bearing control gain in the second operation mode, measure the natural frequency when the magnetic bearing control gain is large, and recover to the first operation mode.

The present invention (claim 7) is an invention of a magnetic bearing device, wherein transition from the first operation mode to the second operation mode and transition from the second operation mode to the first operation mode are repeated.

By repeatedly performing the transition from the first operation mode to the second operation mode and the transition from the second operation mode to the first operation mode, the natural vibration mode can be measured in a plurality of states, and the control can be gradually stabilized.

Further, the present invention (claim 8) is an invention of a magnetic bearing device, wherein the transition from the first operation mode to the second operation mode is performed according to a rotation speed of the rotating body.

The control can gradually be stabilized according to a rotation speed of the rotating body. Particularly, more stable control can be realized with respect to changes in the natural frequency accompanying changes in the rotation speed, such as the gyro effect.

The present invention (claim 9) is an invention of a magnetic bearing device, wherein in the second operation mode, a phase advance amount of a filter disposed to advance a phase of the magnetic bearing control in the first operation mode is increased.

The filter for advancing the phase is required in the magnetic bearing control. Using this filter, the magnetic bearing control gain is increased by making the phase advance amount larger than that in the first operation mode. Accordingly, the measurement sensitivity can be enhanced without increasing the number of extra filters. Consequently, the weight of a central processing unit (CPU) can be reduced.

In addition, the present invention (claim 10) is an invention of a magnetic bearing device, wherein in the second operation mode, a control parameter of a filter is adjusted or the filter is deleted, so as to weaken a degree of lowering of the gain by the filter, the filter being disposed to reduce the gain of the magnetic bearing control in the first operation mode.

The filter for lowering the magnetic bearing control gain is required in the magnetic bearing control. The magnetic bearing control gain is increased by adjusting the filter so as to weaken the degree of lowering of the gain in the second operation mode or by deactivating the filter. As a result of increasing the magnetic bearing control gain by, for example, deactivating the filter, the observation of the natural vibration mode in the second operation mode becomes easy. In particular, the observation of frequency changes in the natural vibration mode that are suppressed by this filter becomes easy.

Also, the present invention (claim 11) is an invention of a magnetic bearing device, wherein a vibration signal generated inside the magnetic bearing controller is applied to the magnetic bearing control at the time of measuring the natural frequency in the second operation mode.

The vibration signal can be generated easily in the magnetic bearing controller by the CPU or the like. By applying the vibration signal, the natural vibration mode can be measured with high sensitivity in the second operation mode, facilitating the observation of the natural vibration mode. In addition, since an external vibration signal generator and an A/D converter are not required, reduction in size and cost can be achieved.

The present invention (claim 12) is an invention of a magnetic bearing device, wherein a vibration signal is not applied to the magnetic bearing control at the time of measuring the natural frequency in the second operation mode.

By increasing the magnetic bearing control gain, self-excited oscillation is likely to occur. The natural vibration mode can be measured by measuring self-excited oscillation. In this configuration, since the vibration signal does not need to be calculated by an external vibration signal generator, an A/D converter, or a CPU, the size and cost can be reduced.

The present invention (claim 13) is an invention of a magnetic bearing device, wherein the second magnetic bearing control gain is gradually increased over a predetermined period of time in the second operation mode, and when an oscillation generated by increasing the second magnetic bearing control gain is detected or when confirmation is made that the second magnetic bearing control gain has reached a predetermined control gain amount, the increase of the second magnetic bearing control gain is stopped.

The second magnetic bearing control gain is gradually increased over a predetermined period of time. When an oscillation generated by increasing the second magnetic bearing control gain is detected or when it is confirmed that the second magnetic bearing control gain has reached a predetermined control gain amount, the increase of the second magnetic bearing control gain is stopped. Consequently, a sudden increase of the oscillation can be suppressed, and the magnetic bearing control can be performed more safely.

Moreover, the present invention (claim 14) is an invention of a vacuum pump equipped with the magnetic bearing device according to any one of claims 1 to 13.

The vacuum pump has a large number of natural vibration modes such as having a rotating body. Although oscillation is likely to occur due to natural vibration, the oscillation can be suppressed effectively because the natural frequency can be measured accurately.

### ADVANTAGEOUS EFFECTS OF INVENTION

As described above, according to the present invention, magnetic bearing control includes the first operation mode for performing normal operation of the rotating body with the first magnetic bearing control gain, and the second operation mode for measuring a natural frequency of the magnetic bearing device while performing temporary operation of the rotating body with the second magnetic bearing control gain, the second magnetic bearing control gain being greater than the first magnetic bearing control gain, which makes it possible to measure with high sensitivity the natural vibration mode. This enables more optimal filter design, leading to stable control.

### BRIEF DESCRIPTION OF DRAWINGS

FIG. 1 is a configuration diagram of a turbomolecular pump used in an embodiment of the present invention;
FIG. 2 is model block diagram of a magnetic bearing control system;
FIG. 3 shows closed-loop transfer function gain characteristics;
FIG. 4 shows an operation flow of a second operation mode;
FIG. 5 shows an operation flow of inter-mode transition;
FIG. 6 is a diagram comparing a gain and a phase of the control system in a first operation mode and the second operation mode with respect to open-loop transfer function characteristics (when the phase is advanced);
FIG. 7 shows an example of a Bode diagram of a phase advance filter;
FIG. 8 shows an example of a Bode diagram of a notch filter;
FIG. 9 is a diagram comparing a gain and a phase of the control system in the first operation mode and the second operation mode with respect to closed-loop transfer function characteristics (when the notch filter is deactivated);
FIG. 10 is a diagram showing how a natural frequency changes as a rotation speed changes when the gyro effect is observed;
FIG. 11 is diagram showing a procedure for adjusting a filter; and
FIG. 12 shows closed-loop transfer function gain characteristics based on a model block of a conventional magnetic bearing control system.

### DESCRIPTION OF EMBODIMENTS

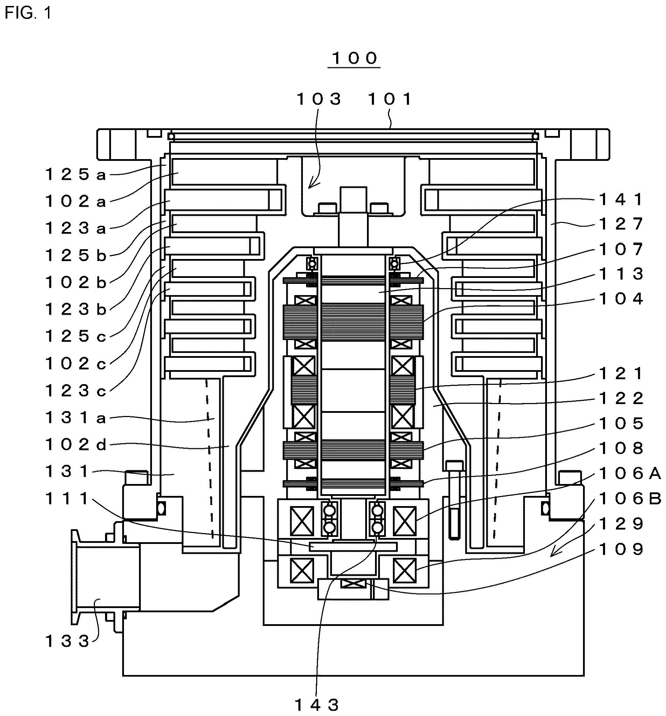

Embodiment of the present invention are now described hereinafter. FIG. 1 shows a configuration diagram of A turbomolecular pump used in the embodiment of the present invention. In FIG. 1, an inlet port 101 is formed at an upper end of a cylindrical outer cylinder 127 of a turbomolecular pump 100. Also, the outer cylinder 127 includes a plurality of rotor blades 102 (102a, 102b, 102c, etc.) configured as turbine blades for sucking and exhausting a gas. A rotating body 103 is a general term for members that rotate together with the rotor blades 102, and is composed of the rotor blades 102, a rotor shaft 113 attached to the center of the rotating body 103, a metal disk 111 attached to the rotor shaft 113, and the like. The rotor shaft 113 is supported in a levitated manner in the air and has the position thereof controlled by, for example, a 5-axis control magnetic bearing.

An upper radial electromagnet 104 has four electromagnets arranged in pairs along an X-axis and a Y-axis. Four upper radial sensors 107 are provided in the vicinity of the upper radial electromagnets 104 so as to correspond to the respective upper radial electromagnets 104. As the upper radial sensors 107, for example, an inductance sensor having a conduction winding, an eddy current sensor, or the like is used, and the position of the rotor shaft 113 is detected based on a change in the inductance of the conduction winding that changes according to the position of the rotor shaft 113. The upper radial sensors 107 are configured to detect a radial displacement of the rotor shaft 113, that is, the rotating body 103 fixed thereto integrally, and send the radial displacement to a central processing unit (CPU) of a control device, not shown.

The central arithmetic processing device is equipped with the function of a magnetic bearing controller. For example, a compensation circuit having a PID adjustment function generates an excitation control command signal of the upper radial electromagnets 104 based on a position signal detected by the upper radial sensors 107, and a magnetic bearing inverter, not shown, excites and controls the upper radial electromagnets 104 based on this excitation control command signal, thereby adjusting an upper radial position of the rotor shaft 113.

The rotor shaft 113 is made of, for instance, a high magnetic permeability material (such as steel, stainless steel) and configured to be attracted by the magnetic force of the upper radial electromagnets 104. Such adjustment is performed in an X-axis direction and a Y-axis direction independently. A lower radial electromagnet 105 and a lower radial sensor 108 are arranged in the same manner as the upper radial electromagnets 104 and the upper radial sensors 107, and a lower radial position of the rotor shaft 113 is adjusted in the same manner as the upper radial position of the same.

Furthermore, axial electromagnets 106A and 106B are arranged so as to vertically sandwich a disc-shaped metal disc 111 provided at the lower part of the rotor shaft 113. The metal disc 111 is made of a high magnetic permeability material such as iron. An axial sensor 109 is configured to detect an axial displacement of the rotor shaft 113 and send an axial position signal thereof to the central processing unit (CPU) of the control device, not shown.

In the magnetic bearing controller of the central processing unit, for example, the compensation circuit having the PID adjustment function generates an excitation control command signal of each of the axial electromagnet 106A and the axial electromagnet 106B based on an axial position signal detected by the axial sensor 109, and the magnetic bearing inverter, not shown, excites and controls each of the axial electromagnet 106A and the axial electromagnet 106B based on the excitation control command signals, whereby the axial electromagnet 106A magnetically draws the metal disc 111 upward and the axial electromagnet 106B draws the metal disc 111 downward, adjusting axial position of the rotor shaft 113.

In this manner, the control device is configured to appropriately adjust the magnetic forces of the axial electromagnets 106A and 106B acting on the metal disc 111 to cause the rotor shaft 113 to magnetically float in the axial direction and keep the rotor shaft 113 in the air in a non-contact manner.

On the other hand, a motor 121 has a plurality of magnetic poles arranged circumferentially to surround the rotor shaft 113. Each of the magnetic poles is controlled by the control device to drive the rotor shaft 113 to rotate by means of electromagnetic force acting between each magnetic pole and the rotor shaft 113. Further, the motor 121 incorporates a rotation speed sensor such as a Hall element, a resolver, and an encoder, not shown, and the rotation speed of the rotor shaft 113 is detected by the detection signal of the rotation speed sensor.

Further, for example, a phase sensor, not shown, is attached in the vicinity of the lower radial sensor 108 to detect the phase of rotation of the rotor shaft 113. In the control device 200, the positions of the magnetic poles are detected by using both of the detection signals of the phase sensor and the rotation speed sensor. A plurality of stator blades 123 (123a, 123b, 123c, etc.) are arranged slightly apart from the rotor blades 102 (102a, 102b, 102c, etc.). The rotor blades 102 (102a, 102b, 102c, etc.) are inclined at a predetermined angle from a plane perpendicular to the axis of the rotor shaft 113, in order to transfer molecules of exhaust gas downward by collision. The stator blade 123 (123a, 123b, 123c, etc.) are made of a metal such as aluminum, iron, stainless steel, or copper, or an alloy containing these metals as components.

Similarly, the stator blades 123 are inclined at a predetermined angle from the plane perpendicular to the axis of the rotor shaft 113, and are arranged alternately with the stages of the rotor blades 102 in such a manner as to face inward of the outer cylinder 127. Outer peripheral ends of the respective stator blades 123 are fitted between and supported by a plurality of stacked stator blade spacers 125 (125a, 125b, 125c, etc.).

The stator blade spacers 125 are each a ring-like member and made of a metal such as aluminum, iron, stainless steel, or copper, or an alloy containing these metals as components. The outer cylinder 127 is fixed to the outer peripheries of the stator blade spacers 125 with a small gap therefrom. A base portion 129 is disposed in the bottom portion of the outer cylinder 127. An outlet port 133 is formed in the base portion 129 and communicated with the outside. The exhaust gas that has entered the inlet port 101 from a chamber (vacuum chamber) side and has been transferred to the base portion 129 is sent to the outlet port 133.

In addition, a threaded spacer 131 is disposed between the bottom of the stator blade spacers 125 and the base portion 129 depending on the use of the turbomolecular pump 100. The threaded spacer 131 is a cylindrical member made of a metal such as aluminum, copper, stainless steel, iron, or an alloy containing these metals as components, and a plurality of thread grooves 131a are engraved in a spiral manner in an inner peripheral surface of the threaded spacer 131. The direction of the spiral of the threaded grooves 131a is a direction in which the molecules of the exhaust gas are transferred toward the outlet port 133 when the molecules of the exhaust gas move in a direction of rotation of the rotating body 103. A cylindrical portion 102d hangs down at the lowermost portion following the rotor blades 102 (102a, 102b, 102c, etc.) of the rotating body 103. An outer peripheral surface of the cylindrical portion 102d is in a cylindrical shape, protrudes toward the inner peripheral surface of the threaded spacer 131, and is positioned in the vicinity of the inner peripheral surface of the threaded spacer 131 with a predetermined gap therebetween. The exhaust gas that has been transferred to the thread grooves 131a by the rotor blades 102 and the stator blades 123 is sent to the base portion 129 while being guided by the thread grooves 131a.

The base portion 129 is a disk-like member constituting a base of the turbomolecular pump 100 and typically made of a metal such as iron, aluminum, or stainless steel. Since the base portion 129 physically holds the turbomolecular pump 100 and functions as a heat conducting path, it is preferred that a metal with rigidity and high thermal conductivity such as iron, aluminum, or copper be used as the base portion 129.

A touchdown bearing 141 is disposed at an upper end of the stator column 122 between the upper radial sensor 107 and the rotating body 103. On the other hand, a touchdown bearing 143 is disposed below the lower radial sensor 108.

Both the touchdown bearing 141 and the touchdown bearing 143 are composed of ball bearings. The touchdown bearing 141 and the touchdown bearing 143 are provided in such a manner that the rotating body 103 can safely shift to the non-levitating state when the rotating body 103 cannot magnetically levitate for some reason, such as when the rotating body 103 rotates abnormally or when a power failure occurs.

According to this configuration, when the rotor blades 102 are driven by the motor 121 to rotate together with the rotor shaft 113, the exhaust gas from the chamber, not shown, is sucked in through the inlet port 101 by the actions of the rotor blades 102 and the stator blades 123. The rotation speed of the rotor blades 102 is usually 20,000 rpm to 90,000 rpm, and the peripheral speed at the tips of the rotor blades 102 reaches 200 m/s to 400 m/s. The exhaust gas sucked in through the inlet port 101 passes between the rotor blades 102 and the stator blades 123 and is transferred to the base portion 129.

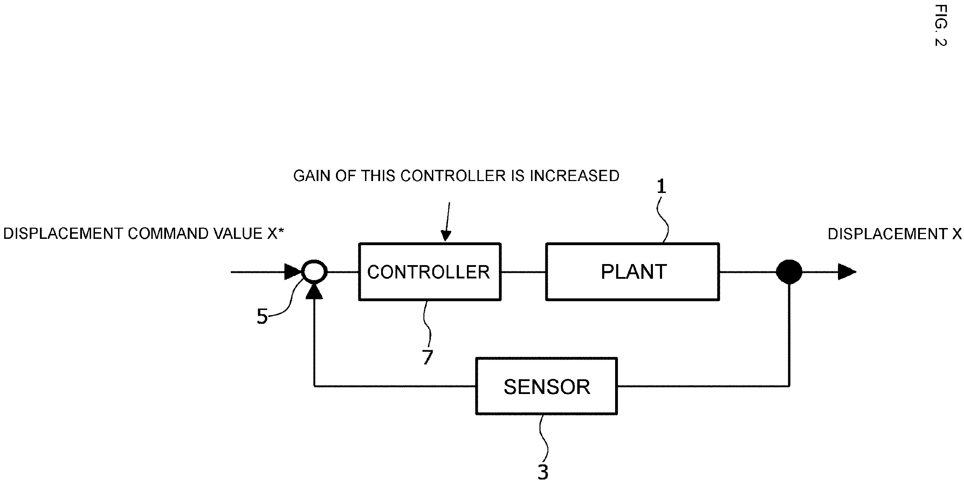

FIG. 2 shows a model block diagram of a magnetic bearing control system. A plant 1 includes, for example, the upper radial electromagnet 104, the lower radial electromagnet 105, the axial electromagnets 106A and 106B, and the rotating body 103 of the turbomolecular pump. For example, a displacement X of the position of the rotating body 103, which is an output signal of the plant 1, is extracted by a sensor 3, and a deviation signal in relation to a displacement command value X* is calculated by a subtracter 5. The sensor 3 is, for example, the upper radial sensor 107, the lower radial sensor 108, or the axial sensor 109. After the deviation signal is adjusted by a controller 7, the deviation signal is input to the plant 1 as a control signal for position adjustment, thereby adjusting the position of the rotating body.

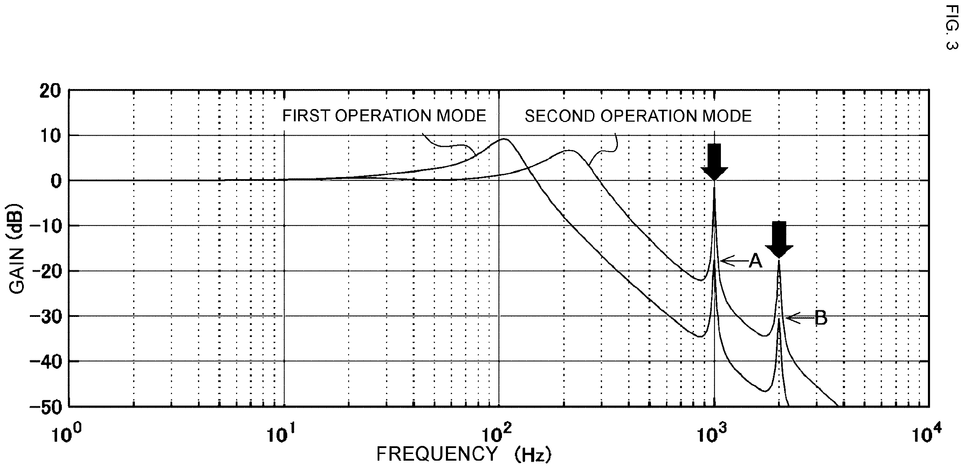

FIG. 3 shows closed-loop transfer function gain characteristics of this model. In FIG. 3, the first operation mode is the closed-loop transfer function gain characteristics of the magnetic bearing system when the turbomolecular pump 100 is operated normally. Both a peak point A and a peak point B of a gain indicating the natural vibration at this time are set so as to exceed a sensor resolution by a margin. Therefore, a magnetic bearing control gain of the controller 7 is temporarily increased. Consequently, the gain of the closed-loop transfer function gain characteristics of the first operation mode is raised to the closed-loop transfer function gain characteristics of the second operation mode.

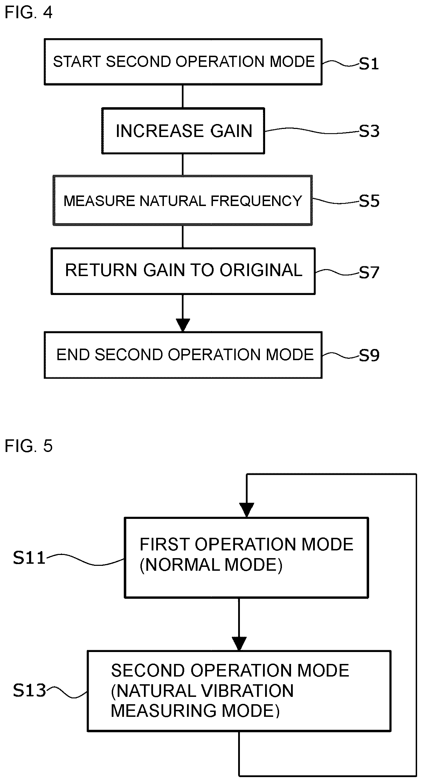

FIG. 4 shows an operation flow of the second operation mode. In FIG. 4, the operation in the second operation mode is started in step 1 (abbreviated as S 1 in the diagram; the same applies hereinafter). In step 3, the magnetic bearing control gain of the controller 7 is increased more than the magnetic bearing control gain obtained in the first operation mode. In step 5, the natural frequency is measured in this state. The method for measuring the natural frequency at this time is preferably a fast Fourier transform, and may be a discrete Fourier transform. The natural frequency to be measured is a bending mode of the rotating body 103, a natural vibration mode of the rotor blades 102, a vibration mode associated with the stator, and a rigid body mode of the rotating body 103. The natural vibration may be computed by a central processing unit (CPU) of a control device or may be computed externally. After the natural frequency is measured in step 5, in step 7 the magnetic bearing control gain of the controller 7 is returned to the magnetic bearing control gain obtained in the first operation mode. Then, in step 9, the operation in the second operation mode is ended.

The magnetic bearing control gain in the second operation mode is greater than that obtained in the first operation mode. Therefore, a signal corresponding to the natural vibration mode included in an output of the magnetic bearing device becomes large, the S/N ratio of the signal improves, and the natural vibration mode can be detected with high sensitivity. This enables more optimal filter design, leading to stable control. Note that the types of this signal include displacement signals and current signals.

The turbomolecular pump includes the rotor blades 102. Although an oscillation is likely to occur due to natural vibration of the rotor blades 102, the natural frequency of the rotor blades 102 can be measured accurately.

FIG. 5 shows an operation flow of inter-mode transition. In FIG. 5, the first operation mode shown in step 11 is a mode in which normal operation is performed. The second operation mode shown in step 13 is a mode in which the natural frequency is measured.

Examples of the conditions for the transition from the first operation mode to the second operation mode include, immediately after shipment, at the time of initial setting, when turning on the power, after a lapse of a certain period of time, when recovering from an error state, at the time of user operation, when attaching or removing the pump, when replacing a cable, or when there is a temperature change.

On the other hand, examples of the conditions for the transition from the second operation mode to the first operation mode include when the measurement of the natural vibration is completed, but if the natural vibration mode is not found in the second operation mode, the operation mode is returned to the first operation mode. On the other hand, if the natural vibration mode is found in the second operation mode, the filter is designed after the operation mode is returned to the first operation mode.

Also, if the natural vibration mode is found in the second operation mode, the filter of the first operation mode may be updated before returning from the second operation mode to the first operation mode.

Furthermore, when a displacement or vibration spectrum equal to or greater than a predetermined value is detected, the second operation mode may be switched to the first operation mode. In other words, in a case where the oscillation is large and dangerous, the measurement is discontinued and the mode is immediately returned to the first operation mode.

In addition, the normal operation is performed in the first operation mode, and thereafter, when necessary, the operation of the second operation mode is performed for a moment, such as for approximately 1 second or less, to measure the natural frequency, and then immediately thereafter, the operation mode may be returned to the first operation mode. In this case, since the magnetic bearing control gain in the second operation mode is increased instantaneously, it is safe to return the operation mode to the first operation mode before the oscillations become large, even if the control condition becomes unstable for a moment. As long as the instantaneous waveform data is acquired, the spectrum analysis can be done even after the operation mode is returned to the first operation mode.

Next is described a method for adjusting the control parameter of the first operation mode after the measurement of the natural vibration mode. Examples of this adjustment include the following methods in addition to those described hereinafter in detail.
1. Create a new filter on the basis of the measured natural vibration mode.
2. Change parameters such as center frequency, line width, and size of the existing filter.
3. Obtain a correlation with information such as the rotation speed and temperature, and change the parameters of the filter accordingly.
4. Change the proportional gain and the integral gain of the control parameters.
5. No changes are made if the impact of natural vibration is considered to be sufficiently small.

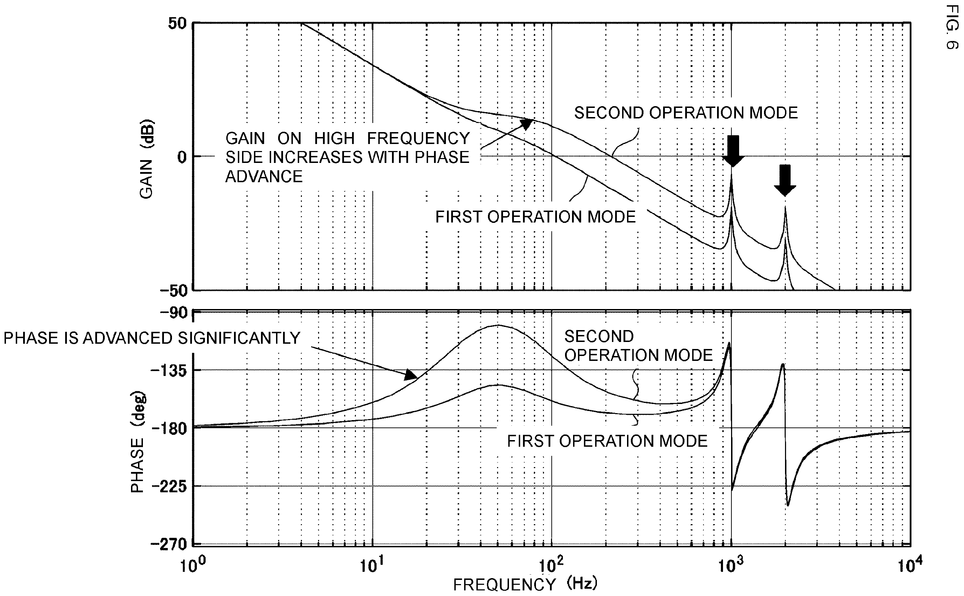

A method for increasing the magnetic bearing control gain will be described next. First, a method for increasing the magnetic bearing control gain by increasing the phase advance amount will be described with reference to FIG. 6. FIG. 6 is a diagram comparing a gain and a phase of the control system in the first operation mode and the second operation mode with respect to open-loop transfer function characteristics from the displacement command value X* to the displacement X in the model block diagram of the magnetic bearing control system shown in FIG. 2.

For the magnetic bearing control, the controller 7 usually requires a differential gain or a phase advance filter for PID control. The differential gain is configured by an exact differential or inexact differential filter. In the second operation mode, the magnetic bearing control gain is increased by making the differential gain or the phase advance amount of the phase advance filter greater than that obtained in the first operation mode.

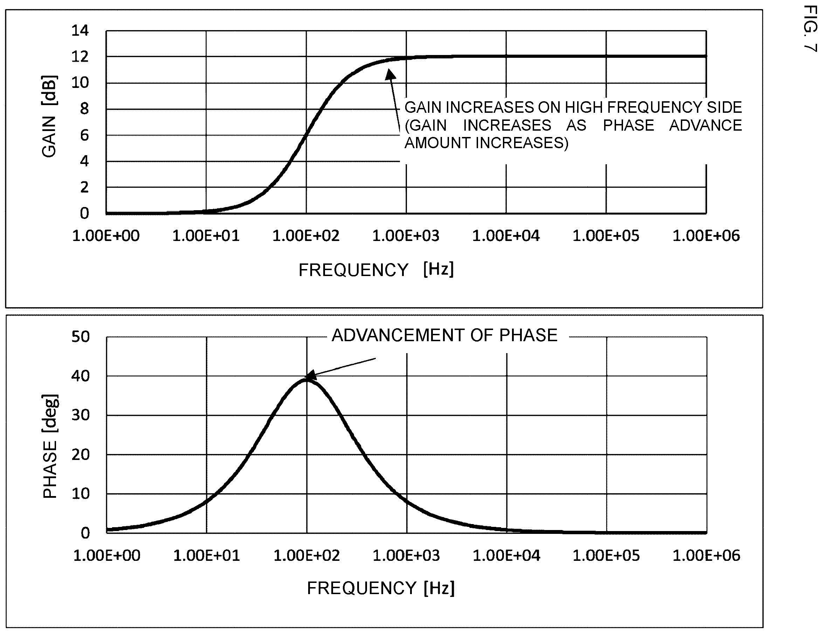

As a result of greatly advancing the phase as shown by the phase characteristics of the open-loop transfer function in FIG. 6, the gain on the high frequency side increases with this phase advancement as shown by the gain characteristics. As shown in an example of a Bode diagram of the phase advance filter in FIG. 7, it can be understood that the gain on the high frequency side increases as the phase advances. The phase advance filter shown in FIG. 7 is an example in which the order is quadratic and the center frequency is 100 Hz. Since the phase advance refers to the function of "D" of so-called PID control and is necessary for the magnetic bearing control, the measurement sensitivity can be enhanced without increasing the number of extra filters. Consequently, the weight of the central processing unit (CPU) can be reduced.

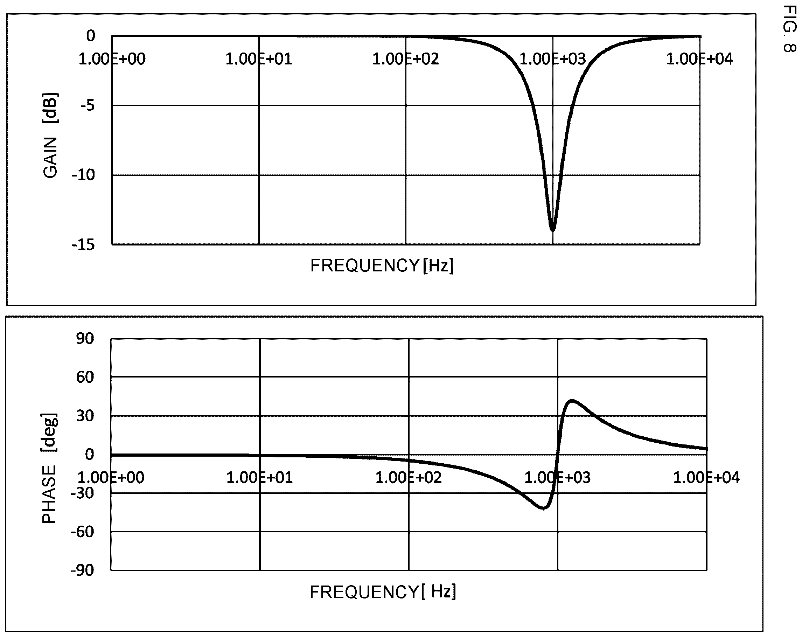

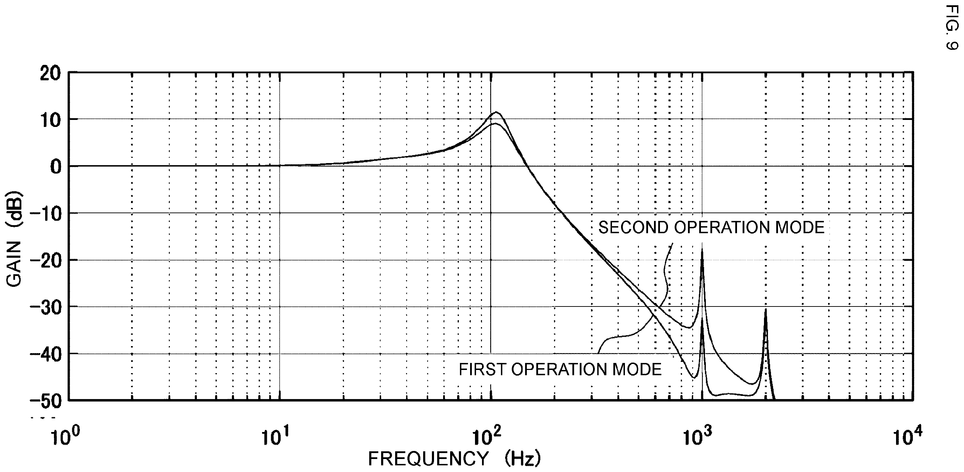

Next, the method for increasing the magnetic bearing control gain by temporarily deactivating a notch filter or a low-pass filter will be described with reference to FIGS. 8 and 9.

For the magnetic bearing control, the controller 7 is usually provided with a notch filter or a low-pass filter. The magnetic bearing control gain is increased by deactivating this notch filter or low-pass filter in the second operation mode. For example, FIG. 8 shows an example of a Bode diagram of a notch filter having a center frequency of 1000 Hz. The magnetic bearing control gain is increased by deactivating this notch filter in the second operation mode.

FIG. 9 is a diagram comparing gains of the control system in the first operation mode and the second operation mode with respect to closed-loop transfer function characteristics from the displacement command value X* to the displacement X in the model block diagram of the magnetic bearing control system shown in FIG. 2. As shown in FIG. 9, as a result of increasing the gain by deactivating the notch filter, the observation of the natural vibration mode in the second operation mode becomes easy. In particular, the observation of frequency changes in the natural vibration mode that are suppressed by this filter becomes easy.

The control parameters of the filter disposed to lower the magnetic bearing control gain in the first operation mode may be adjusted so that the degree of lowering of the gain by the filter is weakened in the second operation mode. The same effect can be achieved in this case as well.

Next is described a method for applying a vibration signal generated inside the magnetic bearing controller to the magnetic bearing control.

In the second operation mode, the controller 7 applies a vibration signal generated in the central processing unit (CPU) to the magnetic bearing control system, to observe the response to the vibration signal in the displacement X. Examples of the vibration signal include a step signal, an impulse signal, white noise, a single frequency sine wave, a frequency swept sine wave, and a swept sine signal. By temporarily applying the vibration signal in the second operation mode as described above, the response of the natural vibration mode at the displacement X becomes large, and the natural vibration mode can be measured with high sensitivity, enabling easy observation of the natural vibration mode. Since an external vibration signal generator or an A/D converter is not required, reduction in size and cost can be achieved.

Note that the natural vibration mode can simply be measured with high sensitivity by using an external vibration signal generator.

A configuration in which a vibration signal is not applied to the magnetic bearing control will be described next. In the second operation mode, since the magnetic bearing control gain is large, self-excited oscillation caused by current harmonics of the magnetic bearing, disturbance due to an impact from the motor 121 or the outside, signal noise, or the like is likely to occur. The natural vibration mode can be measured by measuring self-excited oscillation. In this configuration, since a vibration signal does not need to be calculated by an external vibration signal generator, an A/D converter, or the CPU, reduction in size and cost can be achieved.

A method for gradually increasing the magnetic bearing control gain of the controller 7 will be described next. The magnetic bearing control gain of the controller 7 is gradually increased in the second operation mode. When an oscillation is detected or when an increase of the magnetic bearing control gain of the controller 7 reaches a predetermined gain value, the increase of the second magnetic bearing control gain is stopped.

Consequently, the magnetic bearing control can be prevented from becoming unstable, and a sudden increase in oscillation can be suppressed, allowing for safer magnetic bearing control. When oscillation is detected, it is desirable to immediately transition from the second operation mode to the first operation mode after the increase of the second magnetic bearing control gain is stopped, and to reduce the magnetic bearing control gain.

A method for increasing the magnetic bearing control gain by adding a filter will be described next. The filter to be added is preferably a differentiator, a phase advance filter, a high-pass filter, a low-pass filter, a bandpass filter, or the like. In order to increase the magnetic bearing control gain, a filter such as a differentiator, a phase advance filter, or a high-pass filter is connected in series with the PID controller. A filter such as a differentiator, a phase advance filter, a high-pass filter, a low-pass filter, and a bandpass filter may also be connected in parallel to the PID controller.

The magnetic bearing control gain can be increased in the second operation mode while the rotating body 103 is stopped in each of the aspects described above. In a case where the magnetic bearing control gain is increased while the rotating body 103 is stopped as described above, if the control becomes unstable due to the increase in the magnetic bearing control gain and touchdown occurs, the impact applied to the rotating body 103 or touchdown bearings 141 and 143 becomes smaller than that applied during rotation of the rotating body 103, enhancing the safety.

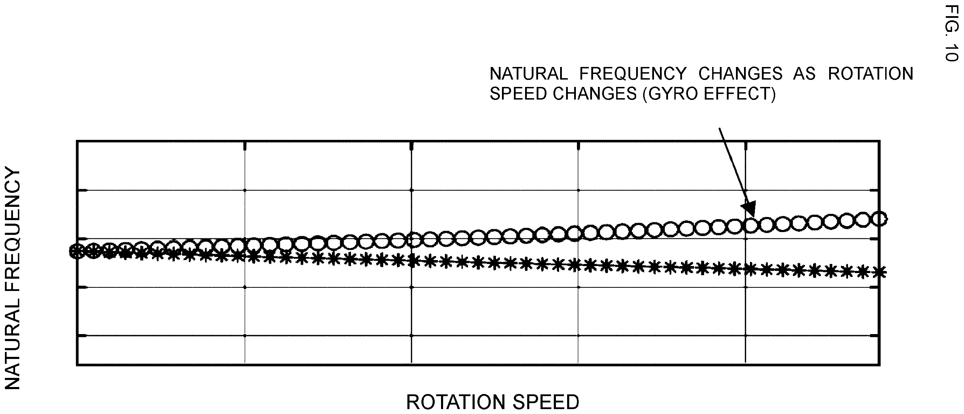

The magnetic bearing control gain may be increased in the second operation mode during rotation of the rotating body 103 in each of the aspects described above. In this case, the natural vibration mode during rotation of the rotating body can be measured with high sensitivity, with the impact of the gyro effect and the like taken into consideration. In particular, when the natural vibration mode is measured using the second operation mode at a plurality of rotation speeds, changes in the natural vibration mode due to changes in the rotation speed under assumption of the gyro effect or the like can be tracked with high sensitivity. FIG. 10 shows changes in a natural vibration mode frequency caused by the rotation speed associated with the gyro effect. In a case where the gyro effect is observed, the natural frequency changes as the rotation speed changes, as shown in FIG. 10. This change is confirmed during rotation of the rotating body 103, and the parameters of the filter are appropriately set at each rotation speed. For example, by changing the center frequency of the notch filter according to the measured value, more optimal filter design is possible and the control becomes more stable. This parameter setting may be done during rotation of the rotating body 103 or when the rotating body 103 is not rotating.

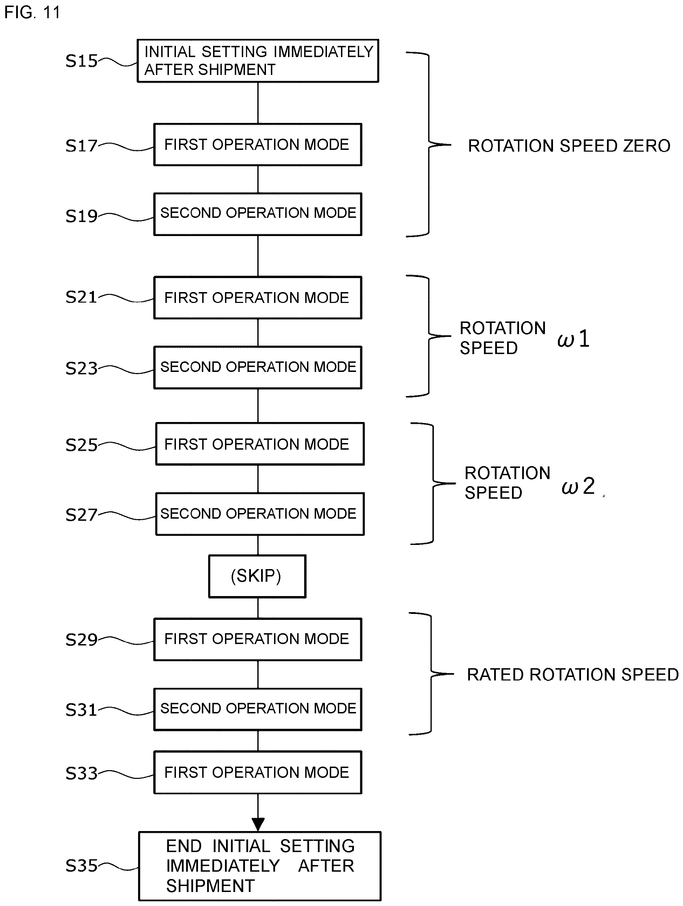

Next is described a method for adjusting the filter in a case where, for example, initial setting is performed immediately after shipment. FIG. 11 shows a procedure for favorably adjusting the filter by combining observation of the natural vibration mode when the rotating body 103 is not rotated and observation of the natural vibration mode when the rotating body 103 is rotated. First, in step 15, the initial setting immediately after shipment is started. In step 17, the magnetic bearing is operated in the first operation mode, but the rotating body 103 is not rotated. In step 19, the second operation mode is carried out in the state where the rotating body 103 is not rotated. That is, at this point, the filter adjustment is roughly completed.

Subsequently, in step 21, the operation mode is returned to the first operation mode, and in step 23, the second operation mode is carried out at the rotation speed ω1. Similarly, the same processing is performed with rotation speed ω2, rotation speed ω3, and so on. In setting the rotation speed, for example, rotation speeds ω from 0 to the rated rotation speed are divided into approximately 5 to 10 sections. For example, the first operation mode and the second operation mode are carried out at 0, 6,000, 12,000, 18,000, 24,000, and 30,000 rpm with respect to the rating of 30,000 rpm. The time of each second operation mode is preferably approximately 1 second or less. This is because the time period in which the magnetic bearing control gain is large and unstable needs to be shortened and the frequency resolution (= 1/(measurement time)) of the Fourier transform needs be reduced to some extent. For example, when data corresponding to 1 second is measured, the frequency resolution of the Fourier transform spectrum is 1 Hz.

Subsequently, the operation mode is returned to the first operation mode in step 29, and the second operation mode is implemented at the rated rotation speed in step 31. The filter is gradually adjusted in this manner. In step 33, the adjustment of the filter is completed, and the operation mode is returned to the first operation mode. Then, in step 35, the initial setting immediately after shipment is completed. Although the filter may be adjusted in the second operation mode, only data collection may be performed in the second operation mode, and data analysis and filter adjustment may be performed in the next first operation mode. The processing shown in FIG. 11 may be performed at the time of manufacturing in the factory. However, by performing the processing after shipping and delivery, the filter can be adjusted in consideration of manufacturing variations and the usage environment, so that more stable control can be performed.

Although oscillation is likely to occur in the second operation mode, the parameters may be readjusted without stopping the operation if this oscillation is not dangerous, and the operation may be stopped immediately if the oscillation is dangerous.

Various modifications can be made to the present invention without departing from the spirit of the present invention, and it goes without saying that the present invention extends to such modifications. In addition, the embodiments described above may be combined in various ways.

### REFERENCE SIGNS LIST

- 1: Plant
- 3: Sensor
- 5: Subtracter
- 7: Controller
- 100: Turbomolecular pump
- 102: Rotor blade
- 103: Rotating body
- 104: Upper radial electromagnet
- 105: Lower radial electromagnet
- 106A, 106B: Axial electromagnet
- 107: Upper radial sensor
- 108: Lower radial sensor
- 109: Axial sensor
- 111: Metal disc
- 113: Rotor shaft
- 121: Motor
- 141, 143: Touchdown bearing

## Claims

1. A magnetic bearing device, comprising:
a rotating body;
a magnetic bearing that magnetically supports the rotating body in a levitated manner in air; and
a magnetic bearing controller that controls the magnetic bearing,
wherein magnetic bearing control by the magnetic bearing controller includes a first operation mode for performing normal operation of the rotating body with a first magnetic bearing control gain, and a second operation mode for measuring a natural frequency of the magnetic bearing device while performing temporary operation of the rotating body with a second magnetic bearing control gain, the second magnetic bearing control gain being greater than the first magnetic bearing control gain.

2. The magnetic bearing device according to claim 1, wherein the natural frequency in the second operation mode is measured during rotation of the rotating body.

3. The magnetic bearing device according to claim 1 or 2, wherein the natural frequency in the second operation mode is measured while rotation of the rotating body is suspended.

4. The magnetic bearing device according to any one of claims 1 to 3, wherein at least one control parameter for controlling the magnetic bearing in the first operation mode is adjusted on the basis of the natural frequency measured in the second operation mode.

5. The magnetic bearing device according to claim 4, wherein the control parameter is adjusted during rotation of the rotating body.

6. The magnetic bearing device according to any one of claims 1 to 5, wherein the second operation mode includes a first step of increasing a gain of the magnetic bearing control from the first magnetic bearing control gain to the second magnetic bearing control gain, a second step of measuring the natural frequency with the second magnetic bearing control gain, and a third step of returning the gain of the magnetic bearing control from the second magnetic bearing control gain to the first magnetic bearing control gain when the measurement in the second step is completed.

7. The magnetic bearing device according to any one of claims 1 to 6, wherein transition from the first operation mode to the second operation mode and transition from the second operation mode to the first operation mode are repeated.

8. The magnetic bearing device according to claim 7, wherein the transition from the first operation mode to the second operation mode is performed according to a rotation speed of the rotating body.

9. The magnetic bearing device according to any one of claims 1 to 8, wherein in the second operation mode, a phase advance amount of a filter disposed to advance a phase of the magnetic bearing control in the first operation mode is increased.

10. The magnetic bearing device according to any one of claims 1 to 8, wherein in the second operation mode, a control parameter of a filter is adjusted or the filter is deleted, so as to weaken a degree of lowering of the gain by the filter, the filter being disposed to reduce the gain of the magnetic bearing control in the first operation mode.

11. The magnetic bearing device according to any one of claims 1 to 10, wherein a vibration signal generated inside the magnetic bearing controller is applied to the magnetic bearing control at the time of measuring the natural frequency in the second operation mode.

12. The magnetic bearing device according to any one of claims 1 to 10, wherein a vibration signal is not applied to the magnetic bearing control at the time of measuring the natural frequency in the second operation mode.

13. The magnetic bearing device according to any one of claims 1 to 12, wherein the second magnetic bearing control gain is gradually increased over a predetermined period of time in the second operation mode, and when an oscillation generated by increasing the second magnetic bearing control gain is detected or when confirmation is made that the second magnetic bearing control gain has reached a predetermined control gain amount, the increase of the second magnetic bearing control gain is stopped.

14. A vacuum pump equipped with the magnetic bearing device according to any one of claims 1 to 13.
